# EUROPEAN PATENT APPLICATION

(11) **EP 1 044 713 A1**
(43) Date of publication of application: **18.10.2000**
(21) Application number: 99660156.3
(22) Date of filing: 01.10.1999
(51) Int. Cl.: B01D 33/073, B01D 33/54, B01D 33/72

(54) **Method and device for clarifying a liquid flow containing finely divided solids**

(30) Priority: 06.10.1998 FI 982161
(71) Applicant: Filtermat Oy, 83500 Outokumpu (FI)
(72) Inventor: Rantala, Pertti, 02260 Espoo (FI)
(74) Representative: Saijonmaa, Olli-Pekka

(57) **Abstract**

The invention relates to a method and an apparatus for clarifying a liquid flow containing finely divided solids. The clarification is performed by means of a filter element (2) made of a porous material, which separates the solids from the liquid filtered through the element mantle (3). The filter element may be cylindrical in shape and it may be disposed concentrically in the cylindrical container (1), the liquid being filtered into the element mantle. In accordance with the invention, the filter element (2) is brought into rotation during the process and the liquid flow (5) to be clarified is fed in a direction substantially opposed to the direction of movement of the element mantle (3), especially tangentially to the mantle. The purpose is to achieve self-cleaning of the filter element under the effect of shear forces generated by the collision between the feed flow (5) and the element mantle (3).

## Description

The invention relates to a method for clarifying a liquid flow containing finely divided solids, using a filter element of a porous material to separate the solids from the liquid filtered through the mantle of the element. The invention also relates to an apparatus for implementing the method.

Small solid particles appearing as opacity in a liquid may constitute an inconvenience affecting the quality of the liquid or a problem in the processing of the liquid. The function of clarifying filtering is to separate such particles from the liquid as completely as possible in order to obtain a clear filtrate. The particle size varies from fractions of a micrometre to a few micrometres, and the amount of solids in the liquid may vary in the range from 1 mg/l to 10 g/l. For even the smallest particles to be separated from the liquid, the pores of the filter material should be small enough, usually less than 5 µm.

For the clarifying filtering process to be profitable, it should have a high and optimally regular capacity. Filtering of small colloidal particles involves the problem of the particles tending to obstruct the micropores of the filtering material in a short time. The large surface area of the pores adsorbs small particles, ions or molecules from the liquid flow-through, resulting in a decrease in the pore volume. Interacting with solid matters accumulated in its vicinity, the surface of the filter material is particularly apt to clogging. The surface may be obstructed by particles of a suitable size penetrating mechanically into the surface pores of the material, or the particles may be bound to the material surface with chemical or electric bounds. The clogging results in a rapid drop in the initially high capacity of the pure filter material to a fraction of its initial capacity.

Conventional solutions for maintaining the filtering capacity high use periodical replacements or regenerations of the filter material. Replacing or removing the filter material, as required by cartridge filters, is an onerous operation entailing a low utilisation ratio. To regenerate the filter material without removal of the material, backwashing, solvent washing and ultrasonic cavitation have been used, all of which also require interruption of the filtering process during the regeneration. Backwashing usually removes only part of the particles obstructing the filter material, but it is still usable for instance as a rapid purifying operation to complement ultrasonic purification.

Avoiding filter clogging and time-consuming regeneration operations caused by this by means of a coarser filter material has not proved an operative solution, because it raises the filtering separation limit, and the transparence of the filtrate obtained does not meet the requirements.

The purpose of the invention is to provide a new solution for performing clarifying filtering which reduces the need of regenerating the filter element of a porous material and thus increases the filtering process capacity without yielding a clarified filtrate of poorer quality. The method of the invention is characterised by the fact that the filter element is brought into rotation and that the liquid flow to be clarified is fed outside the filter element mantle in a direction substantially opposed to the direction of movement of the mantle surface, the liquid being filtered through the element mantle into the element.

The basic idea of the invention is to provide shocks between, on the one hand, particles adhered to the mantle surface of the filter element and obstructing the element, and on the other hand, the liquid flow introduced in the process, the particles being removed and the filtering material pores remaining open under the shearing forces generated by the shocks. The idea is thus to provide continuous self-cleaning of the filter material during the actual filtering process.

The liquid flow feed preferably takes place at a rate higher than the peripheral speed of the filter element. The feed is preferably performed tangentially to the mantle surface of the filter element, and the feed rate may vary in the range from approx. 1 to 4 m/s and the peripheral speed of the filter element in the range from approx. 0.01 to 1 m/s.

The filter element used preferably has the shape of a circular cylinder placed vertically in a cylindrical container. The liquid flow to be clarified can be fed essentially tangentially into a slot between the inner surface of the container and the mantle surface of the filter element, in the top part of the container, the flow proceeding spirally in the slot towards the container bottom at the same time as the liquid is filtered through the porous mantle of the element into the element. The unfiltered portion of the flow is removed through a discharge duct starting from the bottom part of the container, and if desired, it can be recycled to the clarifying process along with the feed flow.

Although the solution of the invention is capable of substantially reducing the clogging tendency of a filter element, there may still be an occasional need for regenerating the element, less frequent though, than in conventional clarifying filters. Such regeneration may be performed in a manner known *per se* by means of backwashing, in which the washing liquid is pressed through the mantle of the filter element in a direction opposed to the filtering direction, under a pressure higher than the filtering pressure. Ultrasonic purification may also be applied preferably by means of one or more ultrasonic oscillators mounted stationarily in the container mantle. The regeneration may further utilise the rotational movement of the filter element by directing high-pressure washing liquid to the mantle of the moving element from one or more washing nozzles mounted preferably tangentially in the container mantle. In this case, the washing liquid is not pressed through the filter element, but the liquid and the solids detached by it are removed from the container bottom into a discharge pipe.

As mentioned above, the invention also relates to an apparatus for clarifying a liquid flow containing finely divided solids. The apparatus comprises a container, a filter element in the container, a duct for feeding liquid flow into the container outside the filter element mantle and a duct for discharging liquid filtered through the mantle into the element from the inside of the element. The apparatus of the invention is characterised by the fact that it further comprises means for bringing the filter element into rotation and that the liquid flow feed duct has been adapted to direct the inflow to the container into a direction substantially opposite to the direction of movement of the mantle surface of the filter element.

The filter element and the container are preferably vertical, concentric circular cylinders, and the liquid flow feed duct joins the container top substantially tangentially, and a discharge duct for removing the unfiltered portion of the feed starts at the container bottom part.

Suitable materials for the filter element are especially porous, ceramic materials, such as aluminium oxide, silicon carbide or silicon nitride. Porous sintered metal, such as stainless steel, nickel or titanium are also usable. The pore size of such an element is preferably in the range from 0.2 to 2 µm so as to be capable of separating colloidal particles such as clay particles and even bacteria from the liquid.

The slot between the inner surface of the container and the filter element mantle, into which the liquid flow is tangentially fed, is advantageously relatively narrow, preferably not more than approx. 10% of the diameter of the filter element, and most preferably in the range from approx. 1 to 3cm. The dimensioning of the apparatus may vary, yet a filter element having a mantle diameter in the range from 30 to 50 cm is suitable for numerous industrial purposes of use.

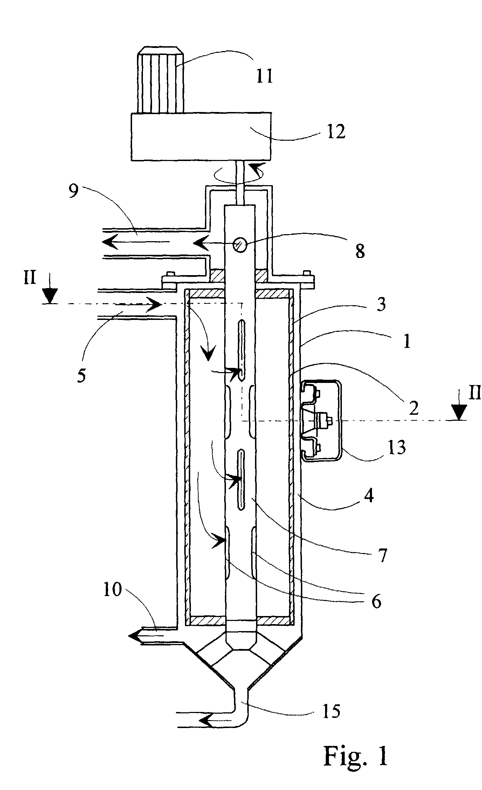

The invention will be described in greater detail below by means of an example and with reference to the accompanying drawings, in which
- figure 1: shows a principally vertical section of the apparatus of the invention comprising a container and a rotating filter element, and
- figure 2: shows a horizontal section of the apparatus along II-II in figure 1.

The apparatus illustrated in the drawings comprises a vertical, cylindrical container 1, in which a concentrically vertical, cylindrical filter element 2 has been placed. The cylindrical mantle 3 of the filter element 2 is made e.g. of sintered ceramics having a pore size in the range from 0.2 to 2 µm. The mantle 3 has a diameter of e.g. approx. 40 cm, and the distance between the mantle and the inner surface of the container 1 is approx. 2.2 cm. Thus an annular space 4 with a width of 2.2 cm is provided between the mantle 3 and the inner surface of the container 1, and during use, this space is filled with feed liquid.

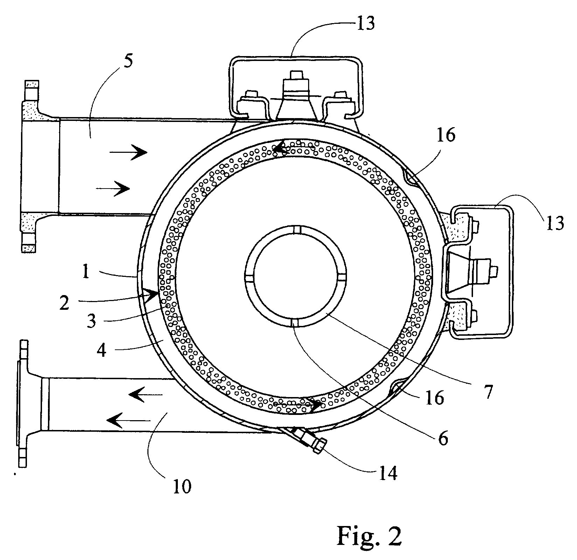

The apparatus of the invention clarifies a liquid containing finely divided, mainly solid impurities which is introduced in the top of the container 1 through a feed duct 5 joining the cylindrical surface of the container tangentially, as illustrated in figure 2. The introduced liquid forms a spiral flow in the annular space 4 between the container and the filter element mantle, and then part of the liquid is filtered through the element mantle 3 and is discharged as a clarified liquid flow through the slots 6 into the axial discharge pipe 7 acting as a support structure for the element and through the opening 8 at its top further into the discharge duct 9. The unfiltered portion of the inflow is removed into the discharge duct 10 starting the bottom part of the container 1, from where, if desired, the flow to be removed can be recycled (not illustrated) into the inflow of the duct 5.

The invention has the essential feature of providing a rotational filter element 2, the rotational movement being disposed counter-clockwise in the illustrated apparatus, against the liquid inflow led from the duct 5. The rotational movement of the filter element 2 is generated by means of an electric motor 11, which, over a transmission gear 12, rotates the said discharge pipe 7 for clarified filtrate, the discharge pipe acting simultaneously as the shaft of the filter element. The rotational movement of the filter element 2 makes the element mantle 3 continuously collide with the flow fed from the duct 5 over the entire mantle periphery, the shear forces generated by the collision detaching solids adhering to the mantle surface and thus preventing clogging of the mantle pores. This arrangement then diminishes the need for regenerating the filter element caused by clogging of the mantle and a drop in the filtering capacity. The speed of the feed flow conducted from the duct 5 may vary in the range from 1 to 4 m/s, which is sufficient to maintain said spiral flow, the peripheral speed of the filter element mantle 3 being preferably lower than the feed flow rate. The speed regulation should be done taking care that the centrifugal force produced by the movement does not exceed the filtering pressure.

The inner surface of the container 1 is provided with ridges 16 extending as in figure 2 vertically from one end to the other of the surface, the annular space 4 between the filter element 2 and the container having been constricted by approximately the half with these ridges. In use, a vacuum is created behind the ridges 16, the turbulence generated by this vacuum enhancing the purification of the surface of the element 2.

Despite the self-cleaning provided by the rotational movement of the filter element, the filter element requires occasional cleaning to detach solids accumulated on its mantle surface. For the regeneration of the filter element 2, ultrasonic oscillators 13 have been mounted in the wall of the container 1 directed towards the mantle 3 of the filter element. The oscillators 13 have been flexibly attached to the wall of the container 1, so that only the element mantle 3 is subjected to vibration removing solids from it. In addition, the wall of the container 1 comprises washing nozzles shown in figure 2 as regeneration means. The washing nozzle 14 is directed tangentially towards the mantle surface 3 of the filter element, and it has the purpose of directing a high-pressure, solids-removing washing liquid jet to the mantle, which has been brought into amovement opposed to the jet. The apparatus may comprise a plurality of washing nozzles 14 mounted as in figure 2 and placed at different levels of the container 1. The washing liquid and solids detached from the filter element mantle 3 are removed into the discharge duct 15 starting from the bottom of the container 1.

Besides the regeneration operations mentioned above, the filter element 2 can be cleaned with backwashing, in which washing liquid is introduced into the filter element through the duct 9 under a pressure higher than the pressure in the filtering step, and in which the liquid having passed through the filter element mantle 3 is discharged into the discharge duct 15 starting from the container bottom. The normal clarification process is interrupted during all of the washing and regeneration steps mentioned above.

The solids contained in the liquid to be clarified which are intended to be separated with the filtering process of the invention may be inorganic or organic substances in an amount preferably not greater than 100 g/l and usually under 10 g/l. Typically, 99% of the particles have a particle size less than 5 µm. The temperature of the flow is usually under 100 °C, it may have a pH in the range from 0 to 13, and a viscosity in the range from 0.5 to 2.0 cp (mPa.s.). The filtering removes particles above 1 µm from the liquid, and the filtrate obtained is manifestly limpid. The solids, which in many cases may be valuable, can be recovered from the outflows from the duct 15 if desired.

It is obvious to those skilled in the art that the different embodiments of the invention are not confined to the examples above, but may vary within the scope of the accompanying claims.

## Claims

1. A method for clarifying a liquid flow containing finely divided solids using a filter element (2) made of a porous material to separate the solids from the liquid filtered through the element mantle (3), **characterised** in that the filter element (2) is brought into rotation and that the liquid flow to be clarified is fed outside the filter element mantle (3) in a direction substantially opposed to the direction of movement of the mantle surface, the liquid being filtered through the element mantle into the element.

2. A method as defined in claim 1, **characterised** in that the liquid flow is fed substantially tangentially to the mantle surface (3) of the filter element.

3. A method as defined in claim 1 or 2, **characterised** in that the filter element (2) has the shape of a circular cylinder and that it is placed in a cylindrical container (1).

4. A method as defined in claim 3, **characterised** in that the filter element (2) and the container (1) are vertically disposed, that the liquid flow is fed into the top part of the container and that the unfiltered portion of the flow is removed through the bottom part of the container.

5. A method as defined in any of the preceding claims, **characterised** in that the feed rate of the liquid flow is higher than the peripheral speed of the filter element (2).

6. An apparatus for clarifying a liquid flow containing finely divided solids by filtering, the apparatus comprising a container (1), a filter element (2) in the container, a duct (5) for feeding the liquid flow into the container outside the filter element mantle (3), and a duct (9) for removing liquid filtered through the mantle into the element, **characterised** in that the apparatus comprises means (11, 12) for bringing the filter element (2) into rotation and that the liquid flow feed duct (5) has been disposed to direct the inflow to the container (1) in a direction substantially opposed to the direction of movement of the mantle surface (3) of the flow filter element.

7. An apparatus as defined in claim 6, **characterised** in that the filter element (2) is made of a porous, preferably ceramic material.

8. An apparatus as defined in claim 6 or 7, **characterised** in that the filter element (2) has the shape of a circular cylinder placed in a cylindrical container (1).

9. An apparatus as defined in claim 8, **characterised** in that the filter element (2) and the container (1) are placed in a vertical position, that the liquid flow feed duct (5) joins the top part of the container substantially tangentially to the mantle surface (3) of the filter element, and that the discharge duct (10) removing the unfiltered portion of the flow starts from the bottom part of the container.

10. An apparatus as defined in claim 8 or 9, **characterised** in that the radial distance between the inner surface of the container (1) and the mantle (3) of the filter element (2) is not more than approx. 10% of the diameter of the filter element mantle and/or approx. 1 to 3 cm.

11. An apparatus as defined in any of claims 6 to 10, **characterised** in that at least one ultrasonic cleaner (13) for regeneration of the filter element (2) has been mounted in the wall of the container (1).

12. An apparatus as defined in any of claims 6 to 11, **characterised** in that at least one washing nozzle (14) directed substantially tangentially to the filter element mantle (3) is provided on the inner surface of the container (1) for cleaning the filter element with a high-pressure liquid.
